Europäisches Patentamt

European Patent Office

Office européen des brevets

(19)

(11) Numéro de publication: **0 215 694**
**B1**

(12) **FASCICULE DE BREVET EUROPEEN**

(45) Date de publication du fascicule du brevet:
**12.09.90**

(51) Int. Cl.⁵: **H04N 5/238**

(21) Numéro de dépôt: **86401758.7**

(22) Date de dépôt: **05.08.86**

(54) **Dispositif de commande automatique de réglage de l'éclairement pour système de prise de vues de télévision.**

(30) Priorité: **06.08.85 FR 8512037**

(43) Date de publication de la demande:
**25.03.87 Bulletin 87/13**

(45) Mention de la délivrance du brevet:
**12.09.90 Bulletin 90/37**

(84) Etats contractants désignés:
**DE FR GB IT NL SE**

(56) Documents cités:
**FR-A- 2 451 684**
**FR-A- 2 511 213**

(73) Titulaire: **THOMSON-CSF, 51, Esplanade du Général de Gaulle, F-92800 Puteaux(FR)**

(72) Inventeur: **Gillet, Claude, THOMSON-CSF SCPI 19, avenue de Messine, F-75008 Paris(FR)**
Inventeur: **Lepage, Claude, THOMSON-CSF SCPI 19, avenue de Messine, F-75008 Paris(FR)**
Inventeur: **Voisin, Gérard, THOMSON-CSF SCPI 19, avenue de Messine, F-75008 Paris(FR)**

(74) Mandataire: **Trocellier, Roger et al, THOMSON-CSF SCPI, F-92045 PARIS LA DEFENSE CEDEX 67(FR)**

## Description

La présente invention se rapporte aux dispositifs de commande automatiques de réglage de lumière pour des systèmes de prise de vues de télévision notamment des tubes Vidicon, des cibles silicium ou des barrettes CCD.

Les systèmes de prise de vues de télévision comportent un dispositif de commande automatique de réglage qui comprend une boucle d'asservissement permettant de commander l'ouverture ou la fermeture du diaphragme pour régler la quantité de lumière éclairant la partie photosensible du tube afin d'éviter la saturation des éléments photosensibles et l'éblouissement.

Ces dispositifs comportent un détecteur de crête qui reçoit le signal vidéo en sortie de la caméra, suivi d'un comparateur qui reçoit le signal crête détecté et un signal de référence et qui délivre un signal d'erreur permettant de commander un mécanisme apte à ouvrir ou fermer le diaphragme placé en amont de l'optique de focalisation du tube.

En effet, sans réglage de l'éclairement des zones fortement éclairées, il se produit un phénomène de saturation qui pollue l'image en faisant apparaître des tâches qui s'élargissent, ce phénomène est connu sous le terme anglo-saxon de blooming.

Un autre phénomène de pollution de même type se produit sur les cibles silicium car pour des raisons technologiques, l'analyse des éléments photosensibles ne peut se faire que sur une zone limitée par rapport à la totalité de zone photosensible. Ainsi, les éléments qui ne sont pas analysés se saturent et font apparaître le phénomène de saturation des bords de la zone analysée, edge-blooming, dans la terminologie anglo-saxonne.

Pour atténuer ces effets néfastes on privilégie une partie de l'image en ouvrant une fenêtre sur la surface de la zone analysée, mais de dimensions inférieures à la zone analysée, qui permet de prendre en compte le signal analysé à l'intérieur de cette fenêtre pour mesurer l'amplitude crête de ce signal et effectuer l'asservissement de commande de lumière à partir de ce signal.

Dans le cas des senseurs du type CCD, les méthodes d'analyses sont différentes, les zones polluées ne se trouvent pas sur les bords mais sur des tranches, du senseur CCD. Pour éviter le phénomène connu sous le terme anglo-saxon de smearing, on choisit également une fenêtre mais dans une zone plus restreinte.

Ces dispositifs d'asservissement automatiques donnent de très mauvais résultats lorsque les images ont une grande dynamique de lumière c'est-à-dire des images qui présentent des zones très claires et des zones très sombres, ce qui est le cas des contre-jours par exemple.

En effet, dans le cas d'une très grande dynamique de lumière, le système de commande automatique devient instable et se met à pomper. La zone sur-éclairée sature, elle s'élargit et gagne le reste de l'image. Le niveau du signal augmente, la tension crête détectée fait intervenir la commande de fermeture du diaphragme pour réduire l'éclairement. La saturation disparaît, l'image est alors insuffisamment éclairée, l'asservissement réagit pour ouvrir le diaphragme. Cette succession d'ouverture et de fermeture du diaphragme entraîne une instabilité du système.

Il existe un dispositif d'asservissement automatique décrit dans la demande de brevet FR-A 2 451 684 permettant d'empêcher la sous-exposition d'une zone relativement sombre dans une scène télévisée. Ce dispositif atténue l'information dans les zones d'images très éclairées, telles que le ciel, pour que l'asservissement se produise sur des zones sombres.

Cependant, ce dispositif faisant intervenir une commande de gain variable, la bande passante de la chaîne de traitement est modifiée et le temps de réponse du diaphragme varie selon les zones de l'image. En outre, ce dispositif ne permet pas d'utiliser toute la dynamique du tube caméra sur une image standard.

La présente invention permet de remédier aux inconvénients des dispositifs connus par un dispositif apte à effectuer une ouverture et une fermeture progressive de la fenêtre dans laquelle est pris le signal sur lequel est effectuée la détection de crête qui permet d'agir sur la commande du diaphragme, de manière à rendre la boucle d'asservissement stable.

L'invention a donc pour objet un dispositif de commande automatique de réglage de l'éclairement pour système de prise de vues de télévision du type senseur CCD ou senseur au silicium comportant une boucle d'asservissement recevant le signal vidéo V délivré par le système de prise de vues et délivrant un signal de commande du réglage de l'éclairement, la boucle comportant un circuit permettant de prendre en compte le signal vidéo V à l'intérieur d'une fenêtre d'observation, un détecteur crête suivi d'un comparateur recevant le signal crête et une tension de référence à laquelle ce signal est comparé, le signal en sortie du comparateur est reçu par des moyens de commande du réglage de l'éclairement après filtrage dans un filtre et amplification dans un amplificateur, caractérisé en ce que le circuit de prise en compte du signal vidéo est connecté entre la borne de sortie du système de prise de vues et le détecteur crête et en ce que ce circuit génère un signal $S_B$ d'ouverture et de fermeture progressive de la fenêtre d'observation de façon à prendre en compte progressivement le signal vidéo V en début et en fin de lignes et/ou de trame afin de stabiliser la boucle d'asservissement du réglage de l'éclairement.

D'autres particularités et avantages de la présente invention apparaîtront clairement à la lecture de la description suivante présentée à titre d'exemple non limitatif et faite en regard des figures du dessin annexé qui représentent :

- figure 1, un schéma général du dispositif selon l'invention ;
- figure 2, un premier mode de réalisation des moyens d'atténuation selon la figure 1 ;
- figure 3, les courbes représentant le signal vidéo et le signal fenêtre.

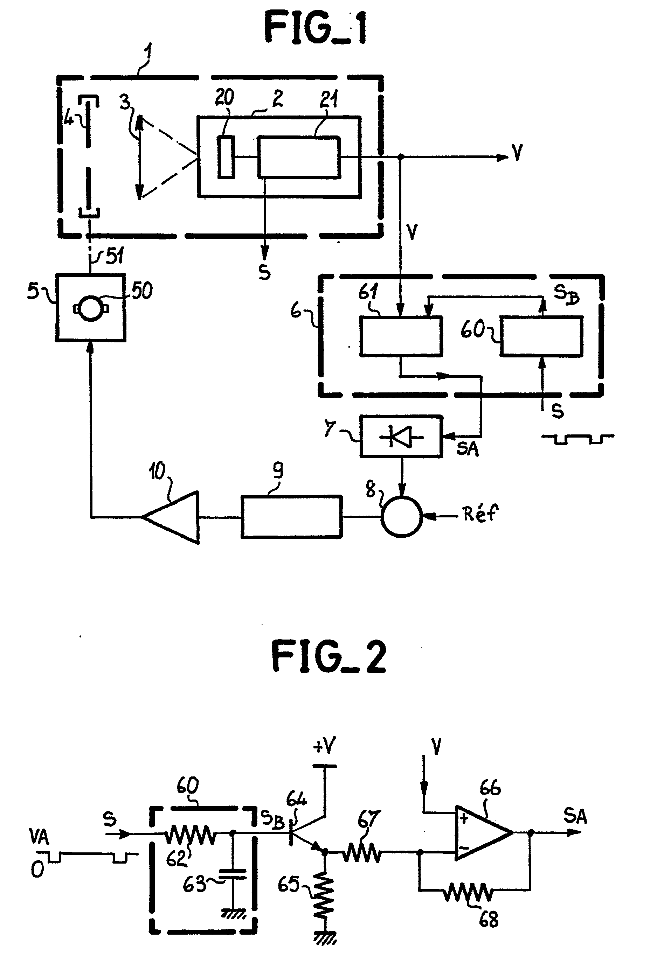

Le dispositif selon la figure 1 comporte un système de prise de vues 1, classique en soi. Ce système comprend une caméra 2 qui comprend elle-même un senseur 20 du type CCD ou cible à silicium et des moyens d'analyse 21 du signal délivré par les éléments photosensibles du senseur. Ces moyens d'analyse délivrent le signal vidéo V qui est exploité par un dispositif d'exploitation non représenté. En amont de la caméra est placée une optique de focalisation 3 qui permet de focaliser l'image de la scène observée sur toute la surface du senseur.

En amont de l'optique 3 est placé un diaphragme ou iris 4 qui permet d'augmenter ou de diminuer la quantité de lumière reçue par le senseur c'est-à-dire l'éclairement du senseur. L'ouverture ou la fermeture du diaphragme 4 est effectuée par des moyens de commande 5 comportant par exemple un moteur 50 agissant sur le diaphragme 4 par l'intermédiaire d'un arbre mécanique 51 couplé au moteur 50.

Le dispositif comporte également une boucle de contre réaction permettant d'effectuer un asservissement sur le réglage de l'éclairement de manière à obtenir un réglage automatique de cet éclairement. La boucle comprend un circuit d'attenuation 6 qui reçoit le signal vidéo V et un signal de commande S obtenu par exemple à partir d'un signal de pilotage de la caméra délivré par les moyens d'analyse 21. Le circuit d'atténuation comprend un générateur 60 de signal $S_B$ d'ouverture et de fermeture progressive de fenêtre généré à partir du signal S. Il comprend également un atténuateur 61 qui reçoit le signal $S_B$ et le signal V pour délivrer un signal $S_A$. Le signal $S_A$ de sortie du circuit 6 est reçu par un circuit détecteur 7. Le signal de sortie du circuit détecteur 7 est reçu par une entrée d'un comparateur 8. Ce comparateur reçoit à une autre entrée sur signal de référence Réf. Le signal de sortie du comparateur est reçu à l'entrée d'un filtre 9. Le signal de sortie du filtre est reçu à l'entrée d'un amplificateur 10 lequel délivre un signal, qui est reçu par les moyens de commande 5.

Le filtre 9 et l'amplificateur 10 sont aptes à délivrer un signal de niveau requis pour permettre au moteur d'agir sur le diaphragme.

Sur la figure 2, on a représenté un premier mode de réalisation du circuit d'atténuation 6 selon l'invention.

Ce circuit comporte un intégrateur 60 qui reçoit le signal de commande S synchrone avec le signal de synchronisation ligne et/ou trame et qui délivre un signal $S_B$. L'intégrateur 61 est constitué par une cellule RC. Le signal S est constitué par des impulsions de niveau 0 ou $V_A$.

Un niveau de tension $V_A$ positif est appliqué entre la résistance 62 et la masse pendant la durée d'une ligne et/ou d'une trame, ce niveau est ramené à zéro pendant le retour ligne, ou trame. Le signal de sortie $S_B$ est pris aux bornes du condensateur 63, une de ses bornes étant à la masse. Ce signal est appliqué sur la base d'un transistor NPN monté en émetteur commun. Le transistor 64 constitue une source de tension continue. Son collecteur est relié à une source d'alimentation +V. Son émetteur est relié à la masse par l'intermédiaire d'une résistance 65. La tension $V_E$ prise entre l'émetteur et la masse est égale à la tension prise entre les bornes du condensateur 63, à laquelle il faut retrancher la tension de la jonction base-émetteur.

Un amplificateur opérationnel 66 monté en soustracteur reçoit sur son entrée directe (positive) le signal vidéo V et sur son entrée inverseuse (négative) le courant traversant une résistance 67 reliée à l'émetteur du transistor 64. Une résistance 68 reliée entre la sortie et l'entrée inverseuse permet d'asservir le signal de sortie SA de l'amplificateur 66 au signal d'entrée. La sortie de l'amplificateur 66 est appliquée à l'entrée du détecteur crête 7.

En présence d'un fort contraste sur l'image, l'image étant constituée par exemple par une zone très claire située dans la partie supérieure et une zone très sombre dans tout le reste, le circuit d'atténuation a pour objet d'atténuer progressivement le signal en début et en fin de ligne et/ou de trame par soustraction du signal généré par le transistor 64 au signal vidéo reçu en même temps de manière à prendre en compte progressivement l'information sur l'éclairement à chaque balayage ligne et/ou trame.

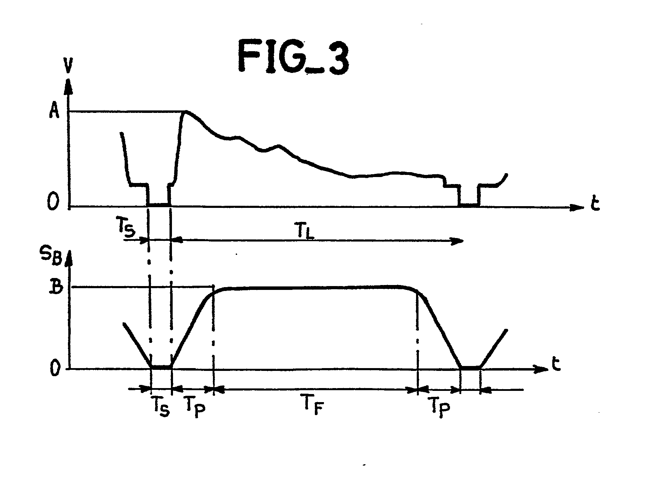

Sur la figure 3 on a représenté l'allure d'une courbe représentant le signal vidéo V et d'une courbe représentant le signal fenêtre progressive $S_B$ obtenu à la sortie de l'intégrateur.

Ces courbes représentent les amplitudes des signaux en fonction du temps.

Le signal vidéo, représenté uniquement pour une ligne de durée $T_L$ présente une amplitude maximum A. Le début et la fin de la ligne sont représentés par les paliers de niveau 0 et de durée $T_S$ de synchronisation de ligne.

Le signal de fenêtre progressive a une amplitude maximale B durant une durée $T_F$ correspondant à l'ouverture entière de la fenêtre. Ce signal a une amplitude qui évolue progressivement de 0 à B pendant une durée $T_p$ juste avant et après la synchronisation ligne $T_S$. Cette durée $T_p$ est fonction de la constante de temps du filtre intégrateur 61.

Le signal de sortie de l'intégrateur 61 constitue donc une fenêtre qui permet de prendre en compte progressivement le signal vidéo en début et fin de ligne et en début et fin de trame.

## Revendications

1. Dispositif de commande automatique de réglage de l'éclairement pour système de prise de vues de télévision (1) du type senseur CCD ou senseur au silicium comportant une boucle d'asservissement recevant le signal vidéo V délivré par le système de prise de vues et délivrant un signal de commande du réglage de l'éclairement, la boucle comportant un circuit (6) permettant de prendre en compte le signal vidéo V à l'intérieur d'une fenêtre d'observation, un détecteur crête (7) suivi d'un comparateur (8) recevant le signal crête et une tension de référence à laquelle ce signal est comparé, le signal en sortie du comparateur (8) est reçu par des moyens de commande (5) du réglage de l'éclairement après filtrage dans un filtre (9) et amplification dans un amplificateur (10), caractérisé en ce que le circuit (6) est connecté entre la borne de sortie du système de prise de vues (1) et le détecteur crête (7) et en ce que ce circuit (6) génère un signal $S_B$ d'ouverture et de fermeture progressive de la fenêtre d'observation de façon à prendre en compte progressivement le signal vidéo V en début et en fin de lignes et/ou de trame afin de stabiliser la boucle d'asservissement du réglage de l'éclairement.

2. Dispositif de commande automatique de réglage selon la revendication 1, dans lequel le circuit (6) reçoit un signal S synchronisé avec la synchronisation ligne ou trame, caractérisé en ce qu'il comporte un intégrateur (60) suivi d'un transistor NPN (64) et d'un soustracteur (66).

3. Dispositif selon la revendication 2, caractérisé en ce que l'intégrateur est constitué par un filtre RC qui délivre le signal intégré $S_B$ obtenu à partir du signal de commande S.

4. Dispositif selon l'une quelconque des revendications 1 à 3, caractérisé en ce que l'atténuateur (61) comprend un transistor (64) monté en émetteur commun, et un amplificateur opérationnel (66) contre réactionné, le transistor (64) recevant sur sa base le signal intégré $S_B$, l'amplificateur (66) recevant sur son entrée inverseuse le signal de sortie du transistor (64) et son signal de sortie $S_A$ et recevant sur son entrée directe le signal vidéo V.

## Claims

1. An automatic exposure control device for a television (1) camera systems of the CCD sensor or silicon type sensor comprising a servo loop receiving the video signal V supplied by the camera system and supplying in exposure control signal, said loop comprising a circuit (6) making it possible to take into account the video signal V in the interior of an observation window, a peak detector (7) followed by a comparator (8) receiving the peak signal and a reference voltage with which the said signal is compared, the output signal of the comparator (8) being received by control means (5) for the regulation of the exposure after filtering in a filter (9) and amplification in an amplifier (10), characterized in that the circuit (6) is connected between the output terminal of the viewing system (1) and the peak detector (7) and in that the said circuit (6) creates a signal $S_B$ for the progressive opening and closing of the observation window in such a manner as to progressively take into account the video signal V at the beginning and end of the lines and/or the frame in order to stabilize the servo loop for regulation of exposure.

2. The automatic control device as claimed in claim 1, in which the circuit (6) receives the signal S synchronized with the line or frame synchronization, characterized in that it comprises an integrator (60) followed by an NPN transistor (64) and a subtracter (66).

3. The device as claimed in claim 2, characterized in that the integrator is constituted by an RC filter which supplies the integrated signal $S_B$ obtained from the control signal S.

4. The device as claimed in any one of the preceding claims 1 through 3, characterized in that the attenuator (61) comprises a transistor (64) in a common emitter circuit, and a negative feedback operational amplifier (66), the transistor (64) receiving at its base the integrated signal SB, the amplifier (66) receiving at its inverting input the output signal of the transistor (64) and its output signal ($S_A$) and receiving at its direct input the video signal V.

## Patentansprüche

1. Automatische Steuervorrichtung zur Belichtungsregelung für eine Fernsehbildaufnahmevorrichtung (1) von CCD-Sensor- oder Siliziumsensorbauart, mit einem Regelkreis, der das von der Aufnahmevorrichtung gelieferte Videosignal (V) empfängt und ein Belichtungssteuersignal liefert, wobei der Kreis eine Schaltung (6), die das Videosignal (V) innerhalb eines Beobachtungsfensters zu berücksichtigen erlaubt, und einen Spitzenwertdetektor (7), dem ein Komparator (8) folgt, der das Spitzenwertsignal und eine Bezugsspannung, mit der das Signal verglichen wird, empfängt, umfaßt und wobei das Signal am Ausgang des Komparators (8) von Steuerungsmitteln (5) zur Belichtungsregelung empfangen wird, nachdem es in einem Filter (9) gefiltert und in einem Verstärker (10) verstärkt worden ist, dadurch gekennzeichnet, daß die Schaltung (6) zwischen den Ausgangsanschluß der Aufnahmevorrichtung und den Spitzenwertdetektor (7) geschaltet ist und daß die Schaltung (6) ein Signal ($S_B$) zum progressiven Öffnen und Schließen des Beobachtungsfensters erzeugt, derart, daß das Videosignal (V) am Anfang und am Ende der Zeilen und/oder des Bildes progressiv berücksichtigt wird, um den Regelkreis zur Belichtungsregelung zu stabilisieren.

2. Automatische Steuervorrichtung zur Belichtungsregelung gemäß Anspruch 1, in der die Schaltung (6) ein mit der Zeilen- oder Bildsynchronisation synchronisiertes Signal (S) empfängt, dadurch gekennzeichnet, daß sie einen Integrator (60), dem ein NPN-Transistor (64) und ein Subtrahierer (66) folgt, umfaßt.

3. Vorrichtung gemäß Anspruch 2, dadurch gekennzeichnet, daß der Integrator von einem RC-Filter gebildet wird, das das aus dem Steuersignal (S) erhaltene integrierte Signal ($S_B$) liefert.

4. Vorrichtung gemäß einem der Ansprüche 1 bis 3, dadurch gekennzeichnet, daß das Dämpfungsglied (61) einen Transistor (64) in Emitterschaltung und einen Rückkopplungsoperationsverstärker (66) umfaßt, wobei der Transistor (64) an seiner Basis das integrierte Signal ($S_B$) empfängt und der Verstärker (66) an seinem invertierten Eingang das Ausgangssignal des Transistors (64) und sein Ausgangssignal ($S_A$) und an seinem direkten Eingang das Videosignal (V) empfängt.

# FIG_1

# FIG_2

# FIG_3